# EUROPEAN PATENT APPLICATION

(11) **EP 4 603 715 A1**
(43) Date of publication of application: **20.08.2025**
(21) Application number: 23877220.6
(22) Date of filing: 05.10.2023
(51) Int. Cl.: F16C 19/54, B23B 19/02, F16C 19/16, F16C 33/66, F16C 35/12, F16C 41/00, F16N 7/32

(54) **BEARING DEVICE AND SPINDLE DEVICE WITH BEARING DEVICE**

(30) Priority: 11.10.2022 JP 2022163209
(71) Applicant: NTN Corporation, Osaka-shi Osaka 530-0005 (JP)
(72) Inventor: SHIBUYA Yusuke, Iwata-shi, Shizuoka 438-8510 (JP); KOIKE Takashi, Iwata-shi, Shizuoka 438-8510 (JP); FUKUSHIMA Yasuyuki, Iwata-shi, Shizuoka 438-8510 (JP)
(74) Representative: Grünecker Patent- und Rechtsanwälte PartG mbB
(86) International application number: PCT/JP2023/036342
(87) International publication number: WO 2024/080215

(57) **Abstract**

A bearing device is provided which includes a first bearing (5a), spacers (6), and a second bearing (5b) disposed on the outer periphery of a spindle (4) so as to be axially located side by side. The first bearing (5a) and the second bearing (5b) each include an inner ring (5ia, 5ib), an outer ring (5ga, 5gb), and a plurality of rolling elements (Ta, Tb). The spacers (6) are an inner ring spacer (6i) disposed between the inner rings (5ia, 5ib) of the first and second bearings (5a, 5b), and an outer ring spacer (6g) disposed between the outer rings (5ga, 5gb) of the first and second bearings (5a, 5b). One of the inner ring spacer (6i) and the outer ring spacer (6g) is a fixed spacer divided into a first member (A) and a second member (B), and a circuit board (33) is disposed in a space between the first member (A) and the second member (B).

## Description

### TECHNICAL FIELD

The present invention relates to a bearing for use in industrial machinery such as a machine tool, and particularly relates to a bearing device including a lubrication mechanism such as an air-oil lubrication mechanism, and a spindle device including the bearing device.

### BACKGROUND ART

In spindle devices such as machine tools, it is required to increase the rotational speed of a spindle (rotate the spindle at a high speed) in order to improve machining accuracy and increase production efficiency. As the rotational speed of the spindle increases, the amount of heat generated from a bearing also increases. In view of this, there is a bearing device using air-oil lubrication with higher cooling efficiency.

For example, the below-identified Patent Document 1 discloses a technique for increasing cooling performance by mounting a lubricating oil supply unit to a bearing device for supporting a spindle. The lubricating oil supply unit includes a heat flow sensor capable of detecting a heat flux (amount of heat passing through a unit area per unit time). The heat flow sensor detects a state of a bearing. When a numerical value indicating the detected state is more than a determination threshold value, the lubricating oil supply unit supplies lubricating oil to the bearing.

### PRIOR ART DOCUMENT

### PATENT DOCUMENT

Patent Document 1: Japanese Unexamined Patent Application Publication No. 2020-159547

### SUMMARY OF THE INVENTION

### PROBLEMS TO BE SOLVED BY THE INVENTION

According to Patent Document 1, the lubricating oil supply unit is disposed in a recess-shaped receiving space within a spacer disposed between rolling bearings axially arranged side by side. Consequently, Patent Document 1 has a problem in that the spacer has a thin-walled portion facing the receiving space, thus complicating the structure of the spacer and making machining of the spacer difficult. Also, it is assumed that the spacer having such a thin-walled portion is likely to undergo strain in a heat treatment step (e.g., a quenching step), and this affects the dimensional accuracy of the spacer.

Hence, it is an object of the present invention to facilitate machining of spacers for receiving a lubricating oil supply unit in a bearing device.

### MEANS FOR SOLVING THE PROBLEMS

In order to achieve the above object, the present invention provides a bearing device comprising: a spindle; a first bearing and a second bearing disposed on an outer periphery of the spindle so as to be axially located side by side; and spacers disposed between the first bearing and the second bearing, wherein each of the first bearing and the second bearing comprises: an inner ring; an outer ring; and a plurality of rolling elements disposed between the inner ring and the outer ring, wherein the spacers comprise: an inner ring spacer disposed between the inner ring of the first bearing and the inner ring of the second bearing, which are axially arranged side by side; and an outer ring spacer disposed between the outer ring of the first bearing and the outer ring of the second bearing, which are axially arranged side by side, wherein one spacer of the inner ring spacer and the outer ring spacer is a fixed spacer, and the other spacer of the inner ring spacer and the outer ring spacer is a rotatable spacer that is rotatable relative to the one spacer, wherein the fixed spacer is divided into a first member and a second member radially overlapping with each other, wherein the first member has an axial width dimension larger than an axial width dimension of the second member, and wherein a circuit board on which a sensor or a processing circuit is mounted is disposed in a space between the first member and the second member (arrangement 1).

An arrangement 2 may be used in which the first member is a cylindrical member, and at least a portion of the first member opposed to the second member has a uniform wall thickness. Also, an arrangement 3 may be used in which an axial preload applied between the first bearing and the second bearing acts on, of the first member and the second member, only the first member, and the first member is made of a metal material or a ceramic material. Also, an arrangement 4 may be used in which the second member is made of a resin material. Also, an arrangement 5 may be used in which the first member and the second member are fixed to each other by adhesion or press-fitting.

In each of the above arrangements, an arrangement 6 may be used in which the first member has a first oil supply path, the second member has a second oil supply path, the first oil supply path and the second oil supply path are open, respectively, to an abutment surface of the first member and an abutment surface of the second member so as to communicate with each other, the second member is formed with a nozzle for supplying a lubricant, and wherein a sealing portion for blocking entry of a gas and a liquid is disposed between the abutment surface of the first member, to which the first oil supply path is open, and the abutment surface of the second member, to which the second oil supply path is open.

One or more arrangements selected from the arrangements 2 to 6 may be added to the arrangement 1. Also, the present invention provides a spindle device comprising: the bearing device according to any one of the above arrangements; and a motor configured to rotate the spindle about a center axis of the spindle.

### EFFECTS OF THE INVENTION

According to the present invention, it is possible to facilitate machining of spacers for receiving a lubricating oil supply unit in a bearing device.

### BRIEF DESCRIPTION OF THE DRAWINGS

Fig. 1 is a vertical sectional view illustrating a first embodiment of the present invention.
Fig. 2 is an enlarged view of a main portion illustrated in Fig. 1.
Fig. 3 is an enlarged sectional view of a main portion illustrating a second embodiment of the present invention.
Fig. 4 is an enlarged sectional view of a main portion illustrating a third embodiment of the present invention.
Fig. 5 is an enlarged sectional view of a main portion illustrating a fourth embodiment of the present invention.
Fig. 6 is an exploded perspective view illustrating a fifth embodiment of the present invention.
Fig. 7 is an enlarged sectional view of a main portion illustrated in Fig. 6.

### BEST MODE FOR CARRYING OUT THE INVENTION

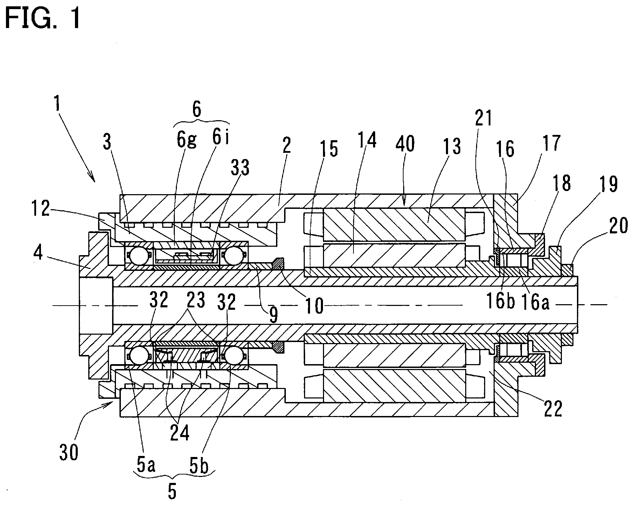

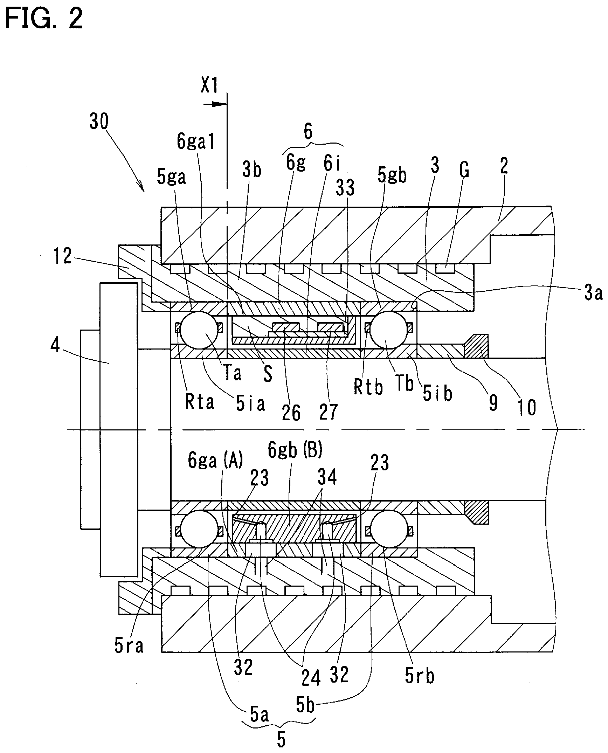

Embodiments of the present invention will be described with reference to the drawings. Figs. 1 and 2 each illustrate a schematic structure of a spindle device 1 according to an embodiment of the present invention. Fig. 1 illustrates the entire spindle device 1. Fig. 2 is an enlarged view of a main part on the left side of Fig. 1, and mainly illustrates a bearing device 30.

### (First Embodiment)

As illustrated in Fig. 1, the spindle device 1 includes a spindle 4, and has a first end in the axial direction of the spindle 4 (end on the right side of Fig. 1) and a second end in the axial direction of the spindle 4 (end on the left side of Fig. 1). Also, the spindle device 1 includes a built-in motor 40 located closer to the first end, and a cutting tool such as an end mill (not shown) is connected to the second end. By using the built-in motor 40 so as to allow the spindle 4 to have a function of a rotor, it is possible to reduce the size of the device. In the device of the built-in motor type, vibrations are reduced during high-speed rotation, but heat is likely to be transmitted from the motor to the spindle 4. Therefore, it is important to take measures for cooling the spindle 4. The built-in motor 40 is hereinafter simply referred to as the motor 40.

The spindle device 1 includes, in its cylindrical outer tube 2, a pair of bearings 5a and 5b located closer to the second end and axially arranged side by side; and spacers 6 disposed between the pair of bearings 5a and 5b so as to be located closer to the second end. The spindle device 1 also includes, in the outer tube 2, the motor 40, which is located close to the first end, and a bearing 16 located closer to the first end than the motor 40 is. The spindle 4 is supported so as to be rotatable, relative to a housing 3 on the radially inner side of the outer tube 2, by the pair of bearings 5a and 5b. The housing 3 is fixedly press-fitted in the outer tube 2. Of the pair of bearings 5a and 5b, the bearing 5a, which is closer to the second end, is hereinafter referred to as the first bearing 5a, and the bearing 5b, which is closer to the first end, is hereinafter referred to as the second bearing 5b. Also, the bearing 16, which is closer to the first end than the motor 40 is, is hereinafter referred to as the third bearing 16.

As illustrated in Fig. 2, the first bearing 5a comprises an inner ring 5ia, an outer ring 5ga, and a plurality of rolling elements Ta disposed between the inner ring 5ia and the outer ring 5ga. The rolling elements Ta are circumferentially retained by an annular cage Rta. As with the first bearing 5a, the second bearing 5b comprises an inner ring 5ib, an outer ring 5gb, and a plurality of rolling elements Tb disposed between the inner ring 5ib and the outer ring 5gb. The spacers 6 comprise an inner ring spacer 6i disposed between the inner ring 5ia and the inner ring 5ib, which are axially arranged side by side, and an outer ring spacer 6g disposed between the outer ring 5ga and the outer ring 5gb, which are axially arranged side by side. The inner ring spacer 6i is disposed so as to tightly abut against the opposed end surfaces of the inner rings 5ia and 5ib. The outer ring spacer 6g is disposed so as to tightly abut against the opposed end surfaces of the outer rings 5ga and 5gb. The inner ring 5ia of the first bearing 5a and the inner ring 5ib of the second bearing 5b are fixed to the outer periphery of the spindle 4 so as to rotate in unison. In this embodiment, the inner ring 5ia, the inner ring 5ib, and the inner ring spacer 6i are fixed by press-fitting (fitting with interference) to the outer periphery of the spindle 4.

The first bearing 5a and the second bearing 5b are bearings to which a preload is applied with an axial force. The first bearing 5a and the second bearing 5b may be, e.g., angular contact ball bearings, deep groove ball bearings, or rolling bearings such as tapered roller bearings. In this embodiment, angular contact ball bearings are used as the bearing device 30. The first bearing 5a and the second bearing 5b are arranged in a back-to-back relationship (DB arrangement). The arrangement in a back-to-back relationship refers to an arrangement in which two angular contact ball bearings are displaced in directions in which, in a vertical cross section including a center axis, the line of load action connecting together theoretical contact portions of each rolling element of one of the two angular contact ball bearings that come into contact with the outer and inner rings of the one angular contact ball bearing, and the line of load action connecting together theoretical contact portions of a respective one of the rolling elements of the other angular contact ball bearing that come into contact with the outer and inner rings of the other angular contact ball bearing intersect with each other on the radially outer side of the pitch circle diameters (PCD) of the rolling elements of the two angular contact ball bearing. By using this arrangement, a radial load and two opposite axial loads can be applied. Also, this arrangement ensures a long distance between the points of action, and thus is advantageous when a moment load acts.

In this embodiment, the third bearing 16 is a cylindrical roller bearing. The radial load and the axial loads acting on the spindle device 1 are supported by the first bearing 5a and the second bearing 5b, which are angular contact ball bearings. The radial load acting on the spindle device 1 is supported by the third bearing 16, which is a cylindrical roller bearing. While, in this embodiment, the structure of supporting the spindle 4 with three bearings, that is, the first bearing 5a, the second bearing 5b, and the third bearing 16 is exemplified and described, the number of bearings used may be increased or decreased as necessary depending on specifications. For example, two bearings, or four or more bearings may be used for supporting the spindle 4.

The housing 3 is formed with a cooling medium flow path or paths G. In this embodiment, a plurality of cooling medium flow paths G having an annular shape are formed in multiple rows so as to be located between the housing 3 and the outer tube 2, and so as to extend around the center axis of the spindle device 1. The annular paths, which are formed in multiple rows, communicate with a lubricating oil supply path. Instead of such cooling medium flow paths G, a cooling medium flow path helically extending in the axial direction may be used, and the shape of the cooling medium flow path(s) used may be changed to various shapes depending on specifications. Alternatively, the cooling medium flow paths G may be grooves formed in the outer periphery of the housing 3, grooves formed in the inner periphery of the outer tube 2, or a combination of the grooves formed in the outer periphery of the housing 3 and the grooves formed in the inner periphery of the outer tube 2. A cooling medium is capable of cooling the first bearing 5a and the second bearing 5b by flowing between the housing 3 and the outer tube 2.

If grease-lubricated bearings are used as the first bearing 5a and the second bearing 5b, the lubricating oil supply path can be omitted. However, for example, if a lubrication such as air-oil lubrication (e.g., oil-air lubrication, or oil and air lubrication) is required, the outer ring spacer 6g is provided with, as lubricating oil supply paths, nozzles 23 and supply paths 24 as illustrated in Figs. 1 and 2. In addition, the housing 3 is provided with, as lubricating oil supply paths, supply paths 34 through which compressed air and lubricating oil are supplied from the outside of the spindle device 1.

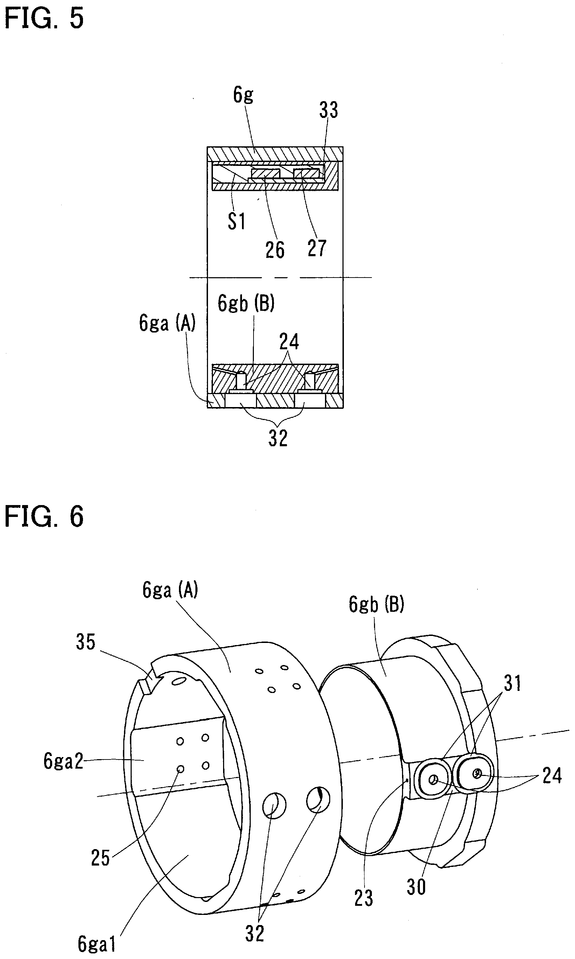

The air-oil lubrication is a lubrication method of conveying, with compressed air, lubricating oil controlled to the optimal amount. Since the air-oil lubrication is a lubrication method of feeding lubricating oil into a bearing with a large amount of air, air needs to be discharged smoothly. A groove 35 as illustrated in Fig. 6 is formed for this purpose. The groove 35 has a depth of 5 mm or less, and preferably has a depth of 1.5 mm or less. In the embodiment, each nozzle 23 of the outer ring spacer 6g has a bore diameter of preferably 1.0 mm to 1.5 mm, and has a length that is four to six times the bore diameter.

When assembling the spindle device 1, first, the first bearing 5a, the spacers 6, the second bearing 5b, and an auxiliary spacer 9 are sequentially inserted relative to the spindle 4, and by tightening a nut 10, an initial preload is applied. The auxiliary spacer 9 is a cylindrical member, and abuts against the end surface of the inner ring 5ib of the second bearing 5b which is closer to the first end. By tightening the nut 10 relative to the spindle 4 from the side close to the first end toward the second end, a force acts on the end surface of the inner ring 5ib of the second bearing 5b via the auxiliary spacer 9, so that the inner ring 5ib is pressed against the inner ring spacer 6i. This force is transmitted to the inner ring 5ib, the rolling elements Tb, and the outer ring 5gb so as to apply a preload between the raceway surfaces of the inner ring 5ib and outer ring 5gb and the rolling elements Tb, and this force is also transmitted from the outer ring 5gb to the outer ring spacer 6g. A thread formed on the inner surface of the nut 10 and a thread formed on the outer surface of the spindle 4 are not shown.

Also, in the first bearing 5a, this force is transmitted to the outer ring 5ga, the rolling elements Ta, and the inner ring 5ia so as to apply a preload between the raceway surfaces of the inner ring 5ia and the outer ring 5ga and the rolling elements Ta. The preloads applied to the first bearing 5a and the second bearing 5b are determined based on, for example, the amount of movement restricted by a dimensional difference between the width of the outer ring spacer 6g and the width of the inner ring spacer 6i. Thereafter, the spindle 4 to which the first bearing 5a and the second bearing 5b are integrally attached is inserted into the housing 3 until the side of the outer ring 5gb of the second bearing 5b that is closer to the first end comes into abutment with a step 3a of the housing 3. Finally, the outer ring 5ga of the first bearing 5a is pushed from the side close to the second end toward the first end by a front lid 12 disposed at the second end, so that the spindle 4 is fixed to the housing 3.

With regard to the third bearing 16, which is a single-row bearing, as illustrated in Fig. 1, the inner ring 16a thereof is axially positioned by a tubular member 15 fitted to the outer periphery of the spindle 4 and an inner ring pressing member 19 having an annular shape and disposed on the side of the tubular member 15 closer to the first end. The inner ring pressing member 19 is prevented from moving out of the device by a nut 20 screwed into the outer periphery of the spindle 4 from the first end toward the second end. An end member 17 having an annular shape is disposed on the of the outer tube 2 closer to the first end. A positioning member 18 is fixed to one end of the end member 17 so as to protrude radially inward relative to the end member 17. Also, a positioning member 21 is fixed to the other end of the end member 17 so as to protrude radially inward relative to the end member 17. The outer ring 16b of the third bearing 16 is sandwiched from both axial sides by the positioning member 18 and the positioning member 21. The inner ring 16a moves in unison with the spindle 4, and moves relative to the end member 17 in accordance with axial expansion and contraction of the spindle 4 due to a temperature change. A thread formed on the inner surface of the nut 20 and a thread formed on the outer surface of the spindle 4 are not shown.

As illustrated in Fig. 1, in a portion of the outer tube 2 close to the first end, a space 22 is defined between the second bearing 5b and the third bearing 16. The space 22 is defined between the spindle 4 and the outer tube 2, and the motor 40 for driving the spindle 4 is disposed in the space 22. The motor 40 includes a stator 13 and a rotor 14, and generates a driving force due to power supply, thereby rotating the spindle 4 about the center axis relative to the outer tube 2. The rotor 14 is fixed to the tubular member 15, which is fitted to the outer periphery of the spindle 4. The stator 13 is fixed to an inner peripheral portion of the outer tube 2. In order to fix the spindle 4 and the tubular member 15 to each other, and fix the stator 13 and the outer tube 2 to each other, a known method such as fitting or press-fitting can be used. A cooling medium flow path for cooling the motor 40 is not shown.

One spacer of the inner ring spacer 6i and the outer ring spacer 6g, which constitute the spacers 6 is a fixed spacer unmovably fixed to the outer tube 2 and the housing 3. The other space is a rotatable spacer rotatable about the center axis relative to the one spacer. In this embodiment, the inner ring spacer 6i is the rotatable spacer, and the outer ring spacer 6g is the fixed spacer.

The outer ring spacer 6g, which is the fixed spacer, is divided into a first member A and a second member B radially overlapping with each other. In other words, the outer ring spacer 6g is constituted by combining together the first member A (referred to as the first member 6ga in this embodiment) and the second member B (referred to as the second member 6gb in this embodiment), which are formed separately from each other. As illustrated in Fig. 2, the axial width dimension of the first member 6ga is larger than the axial width dimension of the second member 6gb. A printed circuit board 33 on which a sensor 26 and a processing circuit 27 are mounted is disposed in a space between the first member 6ga and the second member 6gb.

The second member 6gb is formed with the nozzles 23 for supplying a lubricant. The nozzles 23 are directed, respectively, to a bearing space in the first bearing 5a and a bearing space in the second bearing 5b. Due to this, lubricating oil (air-oil in the embodiment) is supplied through/from the nozzles 23 of the outer ring spacer 6g, which is the fixed spacer. The first member 6ga is formed with first oil supply paths 32 radially extending through the radially inner surface and the radially outer surface of the first member 6ga. The second member 6gb is formed with radially extending second oil supply paths 24. Each second oil supply path 24 has a closed radially inner end. Each nozzle 23 extending sideward is connected to the corresponding second oil supply path 24. The first oil supply paths 32 and the second oil supply paths 24 are open, respectively, to an abutment surface of the first member 6ga and an abutment surface of the second member 6gb such that the first oil supply paths 32 communicate with the respective second oil supply paths 24.

The first member 6ga is an annular member made of a material with high rigidity, such as a metal, and the second member 6gb is fixed to the radially inner surface of this annular member. The first member 6ga and the second member 6gb are desirably fixed to each other by fitting. For example, the first member 6ga and the second member 6gb may be fixed to each other by adhesion, press-fitting, or both of adhesion and press-fitting.

In this embodiment, as illustrated in the upper side of the sectional view of Fig. 2 (cross section of an area where a space S is defined), the second member 6gb is an annular member comprising a cylindrical portion having a cylindrical shape, and a rising portion protruding from the cylindrical portion toward the radially inner surface of the first member 6ga. Particularly in this embodiment, the rising portion is located at one axial end of the cylindrical portion so that the rising portion and the cylindrical portion form an "L" shape in sectional view, but the position of the rising portion may be changed. For example, the rising portion may be located at the other axial end of the cylindrical portion. Alternatively, the rising portion may be located at or near the axial center of the cylindrical portion so that the rising portion and the cylindrical portion form a "T" shape in sectional view. The cylindrical portion on the lower side of the sectional view of Fig. 2 (cross section of an area where the space S is not defined) is thick-walled. The space S is defined within a partial azimuth range including an azimuth range where the printed circuit board 33 is disposed (see Fig. 6 illustrating an embodiment described later).

The printed circuit board (circuit board) 33, on which the sensor 26 and the processing circuit 27 are mounted, is disposed in the space S between the first member 6ga and the second member 6gb. Examples of the sensor 26 include, e.g., an acceleration sensor for detecting a rotating state of the spindle 4, a temperature sensor for detecting a temperature of the spindle 4, a region around the spindle 4, the first bearing 5a, the second bearing 5b, or the like, and other various sensors for monitoring a state of the first bearing 5a or the second bearing 5b. The processing circuit 27 is a control circuit (e.g., a filter circuit or an AD conversion circuit) for processing information received from these sensors, in order to start or stop supplying lubricating oil or to control the amount of lubricating oil to be supplied. On the printed circuit board 33, at least one of these sensors is mounted together with the processing circuit 27. In the present invention, the outer ring spacer 6g, which is the fixed spacer, is divided into the first member 6ga and the second member 6gb, which radially overlap with each other. Therefore, the members/elements constituting the fixed spacer for receiving the printed circuit board 33 are manufactured with ease.

The space S is filled with a sealing agent for protecting the printed circuit board 33. The sealing agent may be, for example, a resin material. Since the space S is filled with the sealing agent, the printed circuit board 33 can be fixed in position and insulated. The axial dimension (width dimension) of the first member 6ga is larger than the axial dimension (width dimension) of the second member 6gb. Therefore, particularly if air-oil is used, a suitable space can be ensured to increase exhaust efficiency during lubrication. If the space is excessively small or excessively large, air-oil cannot be exhausted smoothly.

Also in this embodiment, the first member 6ga is a cylindrical member, and at least the portion of the first member 6ga opposed to the second member 6gb has a uniform wall thickness. It is thus possible to facilitate particularly molding/formation of the first member 6ga. If a heat treatment is performed when manufacturing the first member 6ga, it can be expected to reduce occurrence of a situation in which the first member 6ga is deformed in the heat treatment.

Also, if the first member 6ga is a cylindrical member of which the entire axial area has a uniform wall thickness as in this embodiment, the rigidity of the first member 6ga can be made uniform. It is thus possible to achieve a uniform contact pressure between the first bearing 5a and the spacers 6 and a uniform contact pressure between the second bearing 5b and the spacers 6. It is also possible to reduce inclinations of the first bearing 5a and second bearing 5b (inclinations thereof with respect to the axial direction of the spindle 4), and to stabilize the rotation of the spindle 4 about the center axis.

When assembling the spindle device 1 as described above, an axial preload is applied between the first bearing 5a and the second bearing 5b. Of the first member 6ga and the second member 6gb of the outer ring spacer 6g, this preload acts on only the first member 6ga, i.e., does not act on the second member 6gb. The first member 6ga is required to have a function of supporting a load applied to the spindle 4 (rotating element), and the second member 6gb is not required to have such a function.

Therefore, the first member 6ga, which resists a preload and supports a load during rotation, can be made of, e.g., a material with high rigidity (e.g., a metal material, a ceramic material). On the other hand, the second member 6gb, which does not need to resist a preload and which receives no load, can be made of a material lower in rigidity than the material of the first member 6ga, for example, made of a resin material or the like. The second member 6gb which is made of a resin material can be manufactured with ease even if the second member 6gb has a complicated shape in order to ensure the space S for receiving the printed circuit board 33. Also, if the second member 6gb is made of a resin material, it is possible to easily manufacture components of the second member 6gb having a complicated shape, for example, the nozzles 23 for supplying a lubricant.

If a resin is used as the material of the second member 6gb, and the resin increases the difference in linear expansion coefficient between the first and second members 6ga and 6gb, some points need to be paid attention to. For example, in a case where the linear expansion coefficient of the second member 6gb is larger than the linear expansion coefficient of the first member 6ga, if a temperature rise is seen due to, for example, heat generation from the bearing, the deformation of the second member 6gb by expansion becomes greater/larger than the deformation of the first member 6ga by expansion, at the fitting surfaces (abutment surfaces) of the first member 6ga and the second member 6gb. This causes creep at the second member 6gb which is a resin member, so that the second member 6gb further deforms at the fitting surfaces of the first member 6ga and the second member 6gb. Especially a drop in temperature could lead to a phenomenon in which a gap is generated between the fitting surfaces of the first member 6ga and the second member 6gb, and thus the first member 6ga and the second member 6gb cannot be fixed to each other by fitting.

In view of the above, it is possible to reduce the influence of a dimensional change due to a temperature change by adjusting the linear expansion coefficient of the second member 6gb so as to be closer to the linear expansion coefficient of the first member 6ga. For example, in a case where the first member 6ga is made of a steel material S45C (carbon steel for machine structural use (JIS G 4051)/linear expansion coefficient: approximately 11 to 12 × 10⁻⁶), the second member 6gb is preferably made of a resin material of which the linear expansion coefficient is close to the linear expansion coefficient of the steel material of the first member 6ga. Examples of the resin material include, e.g., polyether ether ketone (PEEK/linear expansion coefficient: approximately 10 to 50 × 10⁻⁶), polyphenylene sulfide (PPS/linear expansion coefficient: approximately 20 to 50 × 10⁻⁶), and polyamide (PA/linear expansion coefficient: approximately 50 to 90 × 10⁻⁶). Also, in a case where the first member 6ga is made of a ceramic material (linear expansion coefficient: approximately 9 to 11 × 10⁻⁶) such as a zirconium oxide, the second member 6gb is preferably made of the above resin material. The resin material may be used in combination with glass fiber or carbon fiber such that the linear expansion coefficient is closer to the linear expansion coefficient of the steel material (S45C) or the ceramic material (zirconium oxide).

### (Second Embodiment)

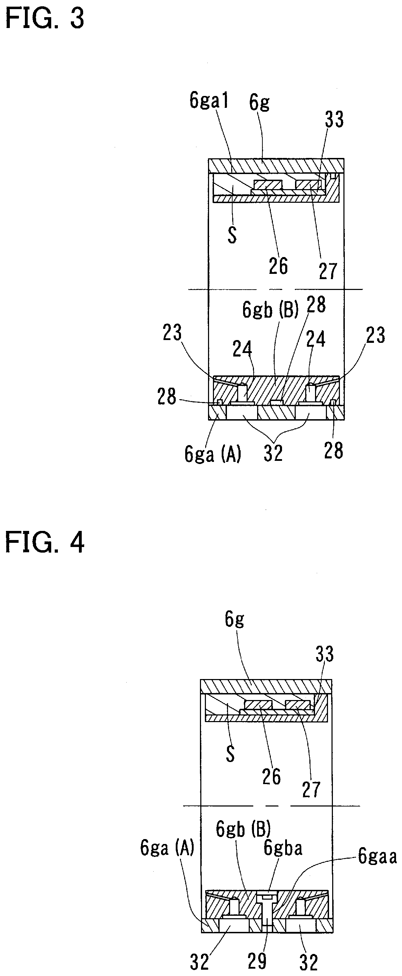

Fig. 3 illustrates a second embodiment in which the structure of the outer ring spacer 6g is modified. Since main features/structures of the second embodiment are the same as those of the first embodiment the difference between the second embodiment and the first embodiment is mainly described below (the same applies to embodiments described later).

As illustrated in Fig. 3, a peripheral groove 28 is formed in the outer periphery of the second member 6gb at one axial end (right end in Fig. 3) thereof so as to extend about the center axis and around the entire circumference, and an O-ring is received in the peripheral groove 28. Therefore, the first member 6ga and the second member 6gb are fixed to each other via the O-ring. It is thus possible to reduce the influence of a temperature change, since a dimensional change at the fitting portions can be absorbed by the O-ring, which is an elastic member. This structure is therefore effective in the case where the linear expansion coefficient of the second member 6gb is significantly different from the linear expansion coefficient of the first member 6ga. The upper side of Fig. 3 illustrates the cross section of the area where the space S is present, and the other axial end of the space S is hermetically sealed with a sealing agent. The sealing agent used preferably has a low hardness.

The lower side of Fig. 3 illustrates the cross section of the area where the space S is not present. In this cross section, the opening of each first oil supply path 32 is opposed to the opening of the corresponding second oil supply path 24 such that the first oil supply path 32 and the second oil supply path 24 communicate with each other. Sealing portions for blocking entry of a gas and a liquid are disposed between the abutment surfaces of the first member 6ga and the second member 6gb where these openings are located. The sealing portions are constituted by a circumferentially extending peripheral groove 28 formed in the outer periphery of the second member 6gb at the other axial end thereof (left end in Fig. 3); a circumferentially extending peripheral groove 28 formed in the outer periphery of the second member 6gb at or near the axial center thereof (center in the lateral direction in Fig. 3); and O-rings or seal members made of, e.g., a resin that are received, respectively, in the peripheral groove 28 at the other axial end and the peripheral groove 28 at/near the axial center, thereby performing sealing. The peripheral groove 28 at the other axial end and the peripheral groove 28 at/near the axial center extend circumferentially about the center axis except for their portions where the space S is present.

### (Third Embodiment)

Fig. 4 illustrates a third embodiment in which the structure of the outer ring spacer 6g is modified.

As illustrated in Fig. 4, the first member 6ga and the second member 6gb are fixed to each other using a bolt 29. In the circumferential direction, at least one bolt 29 needs to be used, but two or more bolts 29 may be used. By fastening the first member 6ga and the second member 6gb to each other using the bolt 29, it is possible to more firmly couple the first member 6ga and the second member 6gb together.

Also, as illustrated in Fig. 4, the second member 6gb has a counterbored hole 6gba, and the first member 6ga has an internal thread 6gaa. The bolt 29 is inserted into the counterbored hole 6gba and the internal thread 6gaa from the radially inner surface of the second member 6gb. The head of the bolt 29 is received in the counterbored hole 6gba so as not to protrude inward beyond the radially inner surface of the second member 6gb. A reverse arrangement may be used in which the first member 6ga has a counterbored hole, the second member 6gb has an internal thread, and the bolt 29 is inserted into the counterbored hole and the internal thread from the radially outer surface of the first member 6ga.

A sealing material may be applied to the fitting surfaces of the first member 6ga and the second member 6gb so that a low-hardness resin layer is formed when the sealing material is cured. In each of the above embodiments, the sealing material may be applied thereto in addition to, or instead of, placing sealing members into the peripheral grooves 28. In this embodiment and embodiments described later, the application of the sealing material and the placement of the seal members into the peripheral grooves 28 can be performed selectively. Also, a sealing agent with which the space S is filled may be the same material as the sealing material.

### (Fourth Embodiment)

Fig. 5 illustrates a fourth embodiment in which the structure of the outer ring spacer 6g is modified.

As illustrated in Fig. 5, the second member 6gb has a sectional shape like the Japanese character " 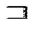 " in its area where a space S1 is present. As illustrated on the upper side of the sectional view of Fig. 5 (cross section of the area where the space S1 is defined), the second member 6gb has a sectional shape like " 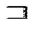 " by comprising a cylindrical portion located on the radially inner side of the second member 6gb, a rising portion protruding from one axial end of the cylindrical portion toward the radially inner surface of the first member 6ga, and an overhanging portion located on the radially outer end of the rising portion so as to extend toward the other axial end of the cylindrical portion. The cylindrical portion is thick-walled on the lower side of the sectional view of Fig. 5 (cross section of an area where the space S1 is not defined). It is thus possible to increase an area of contact between the first member 6ga and the second member 6gb that are fitted to each other, and to more firmly fix the first member 6ga and the second member 6gb to each other.

### (Fifth Embodiment)

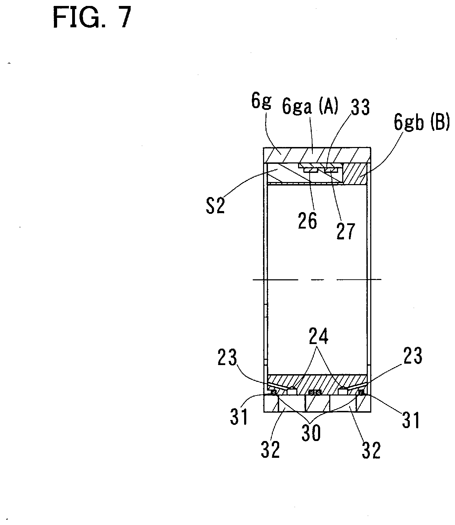

Figs. 6 and 7 illustrate a fifth embodiment in which the structure of the outer ring spacer 6g is modified. Fig. 6 is a perspective view illustrating the first member 6ga and the second member 6gb. Fig. 7 is a sectional view illustrating a state in which the first member 6ga and the second member 6gb illustrated in Fig. 6 are fitted together.

The first member 6ga is a cylindrical member, and has, on its radially inner surface 6ga1, a plurality of flat surface portions 6ga2 disposed at equal intervals. In this embodiment, three flat surface portions 6ga2 are circumferentially disposed. Each flat surface portion 6ga2 has tap holes 25, and the printed circuit board 33 is fixed to the first member 6ga by screwing bolts (not shown) into the respective tap holes 25. Instead of the bolts, an adhesive may be used for fixing the printed circuit board 33 to the first member 6ga. Since the flat surface portions 6ga2 are disposed at equal intervals in the circumferential direction of the first member 6ga, the contact force between the first member 6ga and the outer ring 5ga of the first bearing 5a and the contact force between the first member 6ga and the outer ring 5gb of the second bearing 5b can be each made substantially uniform in the circumferential direction. It is thus possible to further reduce the inclination of the spindle 4 and further stabilize the rotation of the spindle 4. It is therefore possible to improve machining accuracy using the spindle device 1.

A space S2 having a shape like the Japanese character " 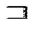 " is defined with the second member 6gb fitted on the radially inner surface 6ga1 (see Fig. 6) of the first member 6ga (see Fig. 7). The printed circuit board 33 is received in the space S2.

Reference numeral 31 in Figs. 6 and 7 refers to annular seal members which are each disposed around a communicating portion between the first oil supply path 32 and the second oil supply path 24. The seal members are received in sealing grooves 30 surrounding the communicating portions. Examples of such a seal member include, e.g., an O-ring, a seal (gasket), and a resin. Such seal members prevent air-oil from leaking from between the first member 6ga and the second member 6gb. Also, when injecting a sealing agent into the space S2, which has a sectional shape like " 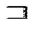 ", such seal members prevent the sealing agent from leaking into the nozzles 23 and the second oil supply paths 24. Due to this, it is unnecessary to take additional countermeasures against leakage, and it is possible to facilitate the assembling work (sealing work). The annular seal members disposed around the communicating portions between the first oil supply paths 32 and the respective second oil supply paths 24 may be used in each of the above embodiments, too.

As in the other embodiments, the second member 6gb, which is a cylindrical member, is formed with the nozzles 23 and the supply paths 24 for air-oil lubrication. As described above, if the second member 6gb is made of a resin, this facilitates machining for forming the nozzles 23 and the supply paths 24. For example, the second member 6gb may be manufactured by injection molding or be manufactured using an additive manufacturing (AM) technique. By using the AM technique, it is possible to dispense with preparation of a specific mold/die, and thus to reduce the cost for preparing molds/dies. The same applies to the other embodiments.

While, in each of the above embodiments, the arrangement of the present invention is described while exemplifying a bearing device using air-oil lubrication as the lubrication method, the present invention may be applied to a bearing device using another lubrication method. For example, the present invention is also applicable to a bearing device using a lubrication method such as oil mist lubrication or jet lubrication.

While, in each of the above embodiments, the inner ring spacer 6i is the rotatable spacer and the outer ring spacer 6g is the fixed spacer, a reverse arrangement may be used in which the inner ring spacer 6i is a fixed spacer and the outer ring spacer 6g is a rotatable spacer. In the reverse arrangement, the inner ring spacer 6i which is the fixed spacer is divided into a first member A and a second member B radially overlapping with each other. In the reverse arrangement, too, as in the above embodiments, the axial width dimension of the first member A is larger than the axial width dimension of the second member B, the printed circuit board 33, on which the sensor 26 or the processing circuit 27 is mounted, is disposed in the space between the first member A and the second member B, and the second member B is formed with the nozzles 23 for supplying a lubricant.

While, in each of the above embodiments, a printed circuit board 33 on which the sensor 26 and the processing circuit 27 are mounted is used, the present invention is not limited thereto. For example, only one of the sensor 26 and the processing circuit 27 may be mounted on a printed circuit board 33.

While in each of the above embodiments, a built-in motor is used as the motor 40, the present invention is not limited thereto. For example, the present invention is also applicable to a bearing device in which a motor selected from various motors other than a built-in motor is used.

Also, while, in each of the above embodiments, the present invention is described while exemplifying a spindle device 1 in which the bearing device supports the spindle 4 such that the spindle 4 is rotatable about the center axis, and the motor 40 rotates the spindle 4 about the center axis, the bearing device according to the present invention is applicable to a machine tool or a device other than the spindle device 1.

The above-described embodiments are mere examples in every respect, and the present invention is not limited thereto. The scope of the present invention is indicated by not the above description but the claims, and should be understood to include all modifications within the meaning and scope equivalent to the scope of the claims.

### DESCRIPTION OF REFERENCE NUMERALS

1: spindle device
4: spindle
5a: first bearing
5b: second bearing
5ia, 5ib: inner ring
5ga, 5gb: outer ring
6: spacer
6i: inner ring spacer
6g: outer ring spacer
23: nozzle
24: second oil supply path
26: sensor
27: processing circuit
32: first oil supply path
40: motor
A: first member
B: second member
Ta, Tb: rolling element

## Claims

1. A bearing device comprising:
a spindle (4);
a first bearing (5a) and a second bearing (5b) disposed on an outer periphery of the spindle (4) so as to be axially located side by side; and
spacers (6) disposed between the first bearing (5a) and the second bearing (5b),
wherein each of the first bearing (5a) and the second bearing (5b) comprises:
an inner ring (5ia, 5ib);
an outer ring (5ga, 5gb); and
a plurality of rolling elements (Ta, Tb) disposed between the inner ring (5ia, 5ib) and the outer ring (5ga, 5gib),
wherein the spacers (6) comprise:
an inner ring spacer (6i) disposed between the inner ring (5ia) of the first bearing (5a) and the inner ring (5ib) of the second bearing (5b), which are axially arranged side by side; and
an outer ring spacer (6g) disposed between the outer ring (5ga) of the first bearing (5a) and the outer ring (5gb) of the second bearing (5b), which are axially arranged side by side,
wherein one spacer of the inner ring spacer (6i) and the outer ring spacer (6g) is a fixed spacer, and the other spacer of the inner ring spacer (6i) and the outer ring spacer (6g) is a rotatable spacer that is rotatable relative to the one spacer,
wherein the fixed spacer is divided into a first member (A) and a second member (B) radially overlapping with each other,
wherein the first member (A) has an axial width dimension larger than an axial width dimension of the second member (B), and
wherein a circuit board (33) on which a sensor (26) or a processing circuit (27) is mounted is disposed in a space between the first member (A) and the second member (B).

2. The bearing device according to claim 1, wherein the first member (A) is a cylindrical member, and
wherein at least a portion of the first member (A) opposed to the second member (B) has a uniform wall thickness.

3. The bearing device according to claim 1 or 2, wherein an axial preload applied between the first bearing (5a) and the second bearing (5b) acts on, of the first member (A) and the second member (B), only the first member (A), and
wherein the first member (A) is made of a metal material or a ceramic material.

4. The bearing device according to any one of claims 1 to 3, wherein the second member (B) is made of a resin material.

5. The bearing device according to any one of claims 1 to 4, wherein the first member (A) and the second member (B) are fixed to each other by adhesion or press-fitting.

6. The bearing device according to any one of claims 1 to 5,
wherein the first member (A) has a first oil supply path (32),
wherein the second member (B) has a second oil supply path (24),
wherein the first oil supply path (32) and the second oil supply path (24) are open, respectively, to an abutment surface of the first member (A) and an abutment surface of the second member (B) so as to communicate with each other,
wherein the second member (B) is formed with a nozzle (23) for supplying a lubricant, and
wherein a sealing portion for blocking entry of a gas and a liquid is disposed between the abutment surface of the first member (A), to which the first oil supply path (32) is open, and the abutment surface of the second member (B), to which the second oil supply path (24) is open.

7. A spindle device comprising:
the bearing device according to any one of claims 1 to 6; and
a motor (40) configured to rotate the spindle (4) about a center axis of the spindle (4).
